# EUROPÄISCHE PATENTSCHRIFT

(11) **EP 3 416 353 B1**
(45) Veröffentlichungstag und Bekanntmachung des Hinweises auf die Patenterteilung: **20.04.2022**
(21) Anmeldenummer: 17176453.3
(22) Anmeldetag: 16.06.2017
(51) Int. Cl.: H04L 29/08, H04L 29/14

(54) **VERFAHREN ZUM VERBESSERTEN BETRIEB EINES TELEKOMMUNIKATIONSNETZES, TELEKOMMUNIKATIONSNETZ, COMPUTERPROGRAMM UND COMPUTERPROGRAMMPRODUKT**
METHOD FOR IMPROVED OPERATION OF A TELECOMMUNICATIONS NETWORK, TELECOMMUNICATIONS NETWORK, COMPUTER PROGRAM AND COMPUTER PROGRAM PRODUCT
PROCÉDÉ DE FONCTIONNEMENT AMÉLIORÉ D'UN RÉSEAU DE TÉLÉCOMMUNICATION, RÉSEAU DE TÉLÉCOMMUNICATION, PROGRAMME INFORMATIQUE ET PRODUIT-PROGRAMME D'ORDINATEUR

(43) Veröffentlichungstag der Anmeldung: 19.12.2018
(73) Patentinhaber: Deutsche Telekom AG, 53113 Bonn (DE)
(72) Erfinder: HOLLSTEIN, Christian, 49179 Ostercappeln (DE)
(74) Vertreter: Schwöbel, Thilo K.

(56) Entgegenhaltungen:
- US-A1- 2016 328 251

## Beschreibung

### Stand der Technik

Die Erfindung betrifft ein Verfahren zum verbesserten Betrieb eines Telekommunikationsnetzes, umfassend eine Mehrzahl von Benutzerendgeräten, durch Nutzung von Netzwerkfunktionsvirtualisierung innerhalb des Telekommunikationsnetzes, wobei das Telekommunikationsnetz der Mehrzahl von Benutzerendgeräten eine Mehrzahl von Telekommunikationsdiensten mittels einer Mehrzahl von virtuellen Netzwerkfunktionsinstanzen bereitstellt, wobei das Telekommunikationsnetz eine Datenbankfunktionalität umfassend einen ersten Datenbanknetzwerkknoten und wenigstens einen zweiten Datenbanknetzwerkknoten aufweist.

Weiterhin betrifft die Erfindung ein Telekommunikationsnetz, umfassend eine Mehrzahl von Benutzerendgeräten und unter Nutzung von Netzwerkfunktionsvirtualisierung zum verbesserten Betrieb des Telekommunikationsnetzes, wobei das Telekommunikationsnetz der Mehrzahl von Benutzerendgeräten eine Mehrzahl von Telekommunikationsdiensten mittels einer Mehrzahl von virtuellen Netzwerkfunktionsinstanzen bereitstellt, wobei das Telekommunikationsnetz eine Datenbankfunktionalität umfassend einen ersten Datenbanknetzwerkknoten und wenigstens einen zweiten Datenbanknetzwerkknoten aufweist.

Ferner betrifft die Erfindung auch ein Computerprogramm mit Programmcodemitteln, mit deren Hilfe die Schritte eines Verfahrens nach einer Ausführungsform der vorliegenden Erfindung durchführbar sind.

Des Weiteren betrifft die Erfindung auch ein Computerprogrammprodukt mit einem computerlesbaren Medium und einem auf dem computerlesbaren Medium gespeicherten Computerprogramm mit Programmcodemitteln zum verbesserten Betrieb eines Telekommunikationsnetzes durch Nutzung von Netzwerkfunktionsvirtualisierung innerhalb des Telekommunikationsnetzes, die dazu geeignet sind, dass die Schritte eines Verfahrens nach einer Ausführungsform der vorliegenden Erfindung durchführbar sind.

Heutige Festnetze und Mobilfunknetze beruhen auf einer Architektur, in der Benutzerprofile [subscriber profiles] in zentralen Datenbanken hinterlegt sind und eine Reihe von Applikationsservern (z.B. HLR, PCRF, HCS, EIR im Mobilfunk) die Geschäftslogik in Richtung der Endbenutzer abwickelen. Der genaue Ablauf der Geschäftslogik wird dabei für jeden Benutzer bzw. Endkunden, der ein Benutzerendgerät, beispielsweise ein Handy, Telefon, Tablet, Laptop usw., benutzt, individuell durch seine in der zentralen Datenbank gespeicherten Profildaten gesteuert.

Es gibt Bestrebungen, Elemente des Kernnetzes (core network) als virtuelle Maschinen (Virtual Network Function, VNF) in eine Cloud zu verlagern. Es ist angedacht, dass solche virtuellen Maschinen "data less" und "state less" sein können, d.h. ihre internen Zustände, bzw. Betriebszustandsdaten, und die aktuell verarbeiteten Benutzersessionsdaten nicht mehr isoliert für sich halten, sondern all deren Änderungen fortlaufend in einer zentralen Subscriber Datenbank (SDM System) speichern. Um eine möglichst hohe Nutzerzufriedenheit und Dienstgüte zu gewährleisten, ergeben sich dabei diverse technische Herausforderungen und Probleme. Bei vielen aus dem Stand der Technik bekannten Systemen werden beispielsweise die Daten zwischen verschiedenen Datenbanknetzwerkknoten ständig repliziert, so dass mehrere Datenbanknetzwerkknoten die aktuellen Daten aufweisen bzw. direkt Zugriff auf diese haben, um eine hohe Dienstgüte (insbesondere für Fehlerfälle oder im Zuge von Skalierung) zu gewährleisten. Dies führt zu einem drastisch erhöhten Transaktionsvolumen zwischen den virtuellen Maschinen, der Datenbank und insbesondere den Datenbaknetzwerkknoten untereinander (das schnell die Größenordnung von Millionen Updates pro Sekunde und mehr erreichen kann), was erhebliche technische Probleme und vielfach erhöhte Anforderungen für die Datenübertragung und die Datenbankennetzwerkknoten selbst mit sich bringt und die Umsetzung solcher Netzwerkarchitekturen bislang erschwert oder verhindert. Im Zusammenhang mit Netzwerkfunktionsvirtualisierung ist aus der US 2016/0328251 A1 ein Verfahren zur Erzeugung mehrerer Instanzen einer virtuellen Netzwerkfunktion auf verschiedenen Servern bekannt, bei dem die Instanzen über das Netzwerk miteinander kommunizieren und ihre Zustände miteinander synchronisieren.

### Offenbarung der Erfindung

Es ist eine Aufgabe der vorliegenden Erfindung, ein Verfahren zum verbesserten Betrieb eines Telekommunikationsnetzes, welches zur Bereitstellung von Telekommunikationsdiensten virtuelle Netzwerkfunktionsinstanzen verwendet, bereitzustellen, um die anfallende Datenübertragungsvolumen und die technischen Anforderungen an Netzwerkelemente zu verringern sowie Kosten zu sparen.

Diese Aufgabe wird erfindungsgemäß gelöst durch ein Verfahren gemäß Anspruch 1.

Erfindungsgemäß ist es hierdurch in vorteilhafterweise möglich, das zu übermittelnde Datenvolumen in einem Telekommunikationsnetz, welches virtuelle Netzwerkfunktionsinstanzen nutzt, zu verringern. Gleichzeitig ist es möglich, eine hohe Dienstgüte (Quality of Service) zu gewährleisten. Insbesondere ist es möglich ohne dass ein permanentes Übermitteln von (geo-redundanten)) Replikaten eines Betriebszustandes einer virtuellen Netzwerkfunktionsinstanz zwischen verschiedenen Datenbanken (bzw. Datenbanknetzwerknoten, insbesondere zentralen Subscriber Datenbanken (SDM System)) nötig ist, dass das Telekommunikationsnetz schnell und mit hoher Zuverlässigkeit auf den Ausfall und/oder die Überlastung einer ersten virtuellen Netzwerkfunktionsinstanz reagieren kann und eine zweite virtuelle Netzwerkfunktionsinstanz den aktuellen Zustand (Betriebszustandsdaten) der ersten virtuellen Netzwerkfunktionsinstanz übermittelt bekommt und die von der ersten virtuellen Netzwerkfunktionsinstanz vor dem Ausfall/der Überlastung übernommene Aufgabe (bei der Bereitstellung eines Services bzw. Dienstes) übernimmt. Es ist dadurch möglich, dass im Durchschnitt enorme Bandbreite in dem Replikationsnetz (zwischen den bzw. für die Datenbanknetzwerkknoten) gespart wird, weil ausschließlich im (seltenen) Fehlerfall die momentanen/aktuellen Betriebszustandsdaten (und möglicherweise die Benutzer Session Daten) der ersten virtuellen Netzwerkfunktionsinstanz repliziert werden.

Erfindungsgemäß hat der Netzbetreiber des Telekommunikationsnetzes dadurch in vorteilhafterweise die Wahl, das Replikationsnetz für einen geringeren Datenstrom auszulegen (weil weniger häufig eine Replikation der Betriebszustandsdaten stattfindet) und damit Kosten zu sparen, oder es für den seltenen "worst case" (Replikation der Betriebszustandsdaten der ersten virtuellen Netzwerkfunktionsinstanz (VNF) im Fehlerfall) zu dimensionieren und bei normalem Betrieb für anderweitige Services zu nutzen oder zu vermieten.

Es ist erfindungsgemäß in vorteilhafterweise möglich, dass bei der Konfiguration einer zweiten virtuellen Netzwerkfunktionsinstanz (insbesondere einer Failover VNF) keine Kenntnis der Datenbanknetzwerkknoten-Replikationsarchitektur vorhanden sein muss, da es erfindungsgemäß möglich ist, dass ein Telekommunikationsdienst sowohl mittels der zweiten virtuellen Netzwerkfunktionsinstanz fortgeführt/übernommen wird, wenn sich die zweite virtuelle Netzwerkfunktionsinstanz zum ersten oder zweiten Datenbanknetzwerkknoten verbindet. Somit ergibt sich eine einfachere Administration des Netzwerks.

Erfindungsgemäß ist es möglich, dass, wenn eine erste virtuelle Netzwerkfunktionsinstanz (bzw. ein VNF) ausfällt, möglicherweise durch einen Stromausfall, eine Überlastung, einen Softwarefehler usw., ein dazu redundantes Element (eine virtuelle Netzfunktionsinstanz) des gleichen Typs (also ein Failover VNF) den letzten gültigen Zustand aus einem Datenbanknetzwerkknoten liest und damit den identischen Service gegenüber dem Benutzern (nahtlos) fortsetzt. Es ist dabei möglich, dass dies so schnell geschieht, dass die Benutzer den Ausfall nicht bemerken oder ihre Verbindungen in tolerierbarer Zeit wieder hergestellt sind (Echtzeitfähigkeit). Dadurch ist es möglich, dass verhindert wird, dass hunderttausende Nutzer bei Ausfall eines Kernnetzelements gleichzeitig versuchen, ihre Verbindung wieder aufzubauen (Reregistration Storm).

Bei aus dem Stand der Technik bekannten Verfahren muss das ganze Kernnetz für diesen schlechtesten Fall eines Reregistration Storms ausgelegt sein, was einen erheblichen technischen Aufwand darstellt und große Kosten verursacht. Durch die Vermeidung von Reregistration Storms können die Kernnetzelemente erfindungsgemäß bedeutend kleiner dimensioniert werden, wodurch sich drastische Einsparungen ergeben. Ebenso ergibt sich ein verbesserter Service gegenüber dem Endkunden.

Bei aus dem Stand der Technik bekannten Systemen werden die Datenbanknetzwerkknoten (SDM Systeme) aus Gründen der Datensicherheit repliziert, d.h. jedwede Änderung (eines Betriebszustandes einer ersten virtuellen Netzfunktionsinstanz) wird mehrfach an georedundante Datenbanknetzwerkknoten gleichen Inhalts kommuniziert. Diese Replica (also die verschiedenen Datenbanknetzwerkknoten) können mehrere hundert Kilometer voneinander entfernt sein. Im Falle einer Störung der ersten virtuellen Netzfunktionsinstanz, muss das Failover VNF (also die zweite virtuelle Netzfunktionsinstanz) daher nicht wissen, zu welcher der redundanten Datenbanknetzwerkknoten sie sich verbinden soll, um den Service der gestörten ersten virtuellen Netzfunktionsinstanz zu übernehmen. Jedoch ändern sich die inneren Zustände und User Session Daten von virtuellen Netzfunktionsinstanzen (VNF's) durch die Vielzahl von gleichzeitig aktiven Benutzern mit einer sehr hohen Rate, die beispielsweise mehrere Millionen Buchungsvorgänge pro Sekunde in einem Datenbanknetzwerkknoten verursacht. All diese Änderungen können in aus dem Stand der Technik bekannten Verfahren wegen der Netzwerklatenz im geo-redundanten Replikationsnetz nicht mit vernünftigem Aufwand an die Replica kommuniziert werden, ohne dass immense Kosten entstehen.

Erfindungsgemäß ist es nicht nötig (insbesondere dadurch, dass wenigstens ein Teil der Betriebszustandsdaten vom ersten Datenbanknetzwerkknoten zum zweiten Datenbanknetzwerkknoten repliziert wird), dass jede Änderung der in die Bereitstellung eines Telekommunikationsdienstes involvierten virtuellen Netzfunktionsinstanzen (also beispielsweise der ersten virtuellen Netzfunktionsinstanz) georedundant in mehreren Datenbanknetzwerkknoten (also mindestens dem ersten und zweiten Datenbanknetzwerkknoten) gespeichert wird. Es ist also nicht nötig, dass jede Änderung der in die Bereitstellung eines Services involvierten virtuellen Netzfunktionsinstanzen vom ersten Datenbanknetzwerkknoten zum zweiten Datenbanknetzwerkknoten repliziert wird. Erfindungsgemäß wird lediglich im Falle der Detektion eines Fehlers/einer Störung/einer Überlastung der ersten virtuellen Netzfunktionsinstanz ein Replikat der momentanen Betriebszustandsdaten der ersten virtuellen Netzfunktionsinstanz (oder eines Teils davon) an den zweiten Datenbanknetzwerkknoten (und möglichweise an weitere Datenbanknetzwerkknoten) übermittelt. Dadurch wird der Datenaustausch zwischen Datenbanknetzwerkknoten vermindert, aber dennoch im Falle eines Fehlers/einer Störung/einer Überlastung der ersten virtuellen Netzfunktionsinstanz kann die zweite virtuelle Netzfunktionsinstanz (also die Failover VNF) von jedem der ersten oder zweiten Datenbanknetzwerkknoten (oder einem anderen Datenbanknetzwerkknoten) den letzten gültigen (bzw. momentanen) Betriebszustand der ersten virtuellen Netzfunktionsinstanz erhalten, ohne dass im Vorhinein ein festgelegter Datenbanknetzwerkknoten der zweiten virtuellen Netzfunktionsinstanz zum Laden des letzten gültigen Betriebszustandes zugeordnet sein muss.

Nicht beanspruchte alternative Möglichkeiten bestehen darin, dass lediglich im Falle der Detektion eines Fehlers/einer Störung/einer Überlastung der ersten virtuellen Netzfunktionsinstanz, die zweite virtuelle Netzwerkfunktionsinstanz - insbesondere durch den ersten Datenbanknetzwerkknoten oder durch einen anderen Netzwerkknoten des Telekommunikationsnetzes - eine Referenzinformation auf den Speicherort der Betriebszustandsdaten übertragen wird, oder die zweite virtuelle Netzwerkfunktionsinstanz eine Anfrage - insbesondere eine Rundsendeanfrage [broadcast request] - zur Ermittlung des Speicherorts der Betriebszustandsdaten oder zum Erhalt einer Referenzinformation auf den Speicherort der Betriebszustandsdaten an den ersten und/oder zweiten Datenbanknetzwerkknoten überträgt. Dadurch ist es möglich, dass der Datenaustausch zwischen Datenbanknetzwerkknoten vermindert wird, aber dennoch im Falle eines Fehlers/einer Störung/einer Überlastung der ersten virtuellen Netzfunktionsinstanz, die zweite virtuelle Netzfunktionsinstanz (also die Failover VNF) die momentanen Betriebszustandsdaten der ersten virtuellen Netzfunktionsinstanz erhalten kann, ohne dass - zum Laden der Betriebszustandsdaten - der zweiten virtuelle Netzfunktionsinstanz im Vorhinein ein festgelegter Datenbanknetzwerkknoten zugeordnet sein muss. Es ist beispielsweise möglich, dass die virtuellen Netzfunktionsinstanzen im ihnen zugeordneten Datenbanknetzwerkknoten an einem bestimmten Speicherplatz ihren internen Zustand (also ihre momentanen Betriebszustände) und eine Liste derjenigen Subscriber (identifiziert durch deren Schlüssel, z.B. Telefonnummer, IMSI, IMPU, IMPI usw.) ablegen, deren aktuelle Session Daten sie gerade bearbeiten. Es ist möglich, dass diese beiden Sorten von Daten in Echtzeit aktuell gehalten werden. Es ist demnach möglich, dass, wenn die erste virtuelle Netzfunktionsinstanz ausfällt oder in Überlast geht, die Failover VNF(also die zweite virtuelle Netzfunktionsinstanz):
-- entweder von dem ersten Datenbanknetzwerkknoten oder der Netzwerk Administration (OAM System) benachrichtigt wird, und/oder
-- per Broadcast Suche den Datenbanknetzwerkknoten findet, welcher den letzten Zustand der gestörten ersten virtuellen Netzfunktionsinstanz gespeichert hat, und/oder
-- die Betriebszustandsdaten und anhand der Liste der Subscriber Schlüssel die User Session Daten von dort übernimmt, und/oder
-- die Betriebszustandsdaten und User Session Daten in demjenigen Datenbanknetzwerkknoten weiterpflegt, mit dem sie bevorzugt in Verbindung steht. Dies kann das ursprüngliche Datenbanknetzwerkknoten oder ein anderer sein.

Gemäß einer Ausführungsform der Erfindung ist es vorgesehen, dass die Betriebszustandsdaten im dritten Schritt vom ersten Datenbanknetzwerkknoten oder vom zweiten Datenbanknetzwerkknoten zur zweiten virtuellen Netzwerkfunktionsinstanz übertragen werden, insbesondere in Abhängigkeit davon, ob die zweite virtuelle Netzwerkfunktionsinstanz die Betriebszustandsdaten vom ersten Datenbanknetzwerkknoten oder vom zweiten Datenbanknetzwerkknoten anfordert.

Gemäß einer Ausführungsform der Erfindung ist es vorgesehen, dass die Betriebszustandsdaten Subskriptionsdaten [subscription data], Sitzungsdaten [session data] und/oder Anrufzustandsdaten [call state data] umfassen, wobei wenigstens ein Teil der Sitzungsdaten und/oder der Anrufzustandsdaten während des zweiten Schritts vom ersten Datenbanknetzwerkknoten zum zweiten Datenbanknetzwerkknoten repliziert werden.

Hierbei ist es gemäß einer Ausführungsform der Erfindung in vorteilhafterweise möglich, dass die vorliegende Methode besonders effizient für "data less" und "state less" virtuelle Netzwerkfunktionsinstanzen verwendbar ist.

Gemäß einer Ausführungsform der Erfindung ist es vorgesehen, dass die Betriebszustandsdaten im ersten Schritt durch die erste virtuelle Netzwerkfunktionsinstanz und im Wesentlichen kontinuierlich an den ersten Datenbanknetzwerkknoten übertragen werden.

Gemäß der vorliegenden Erfindung übermittelt während des ersten Schritts (insbesondere während des fehlerfreien Betriebs der ersten virtuellen Netzwerkfunktionsinstanz) die erste virtuelle Netzwerkfunktionsinstanz ihren aktuellen Betriebszustand an den ersten Datenbanknetzwerkknoten, so dass im ersten Datenbanknetzwerkknoten (immer) eine aktueller/momentaner Betriebszustand der ersten virtuellen Netzwerkfunktionsinstanz vorhanden ist. Im Falle eines Fehlers (bzw. der Detektion eines Fehlers) der ersten virtuellen Netzwerkfunktionsinstanz wird -wenigstens ein Teil der Betriebszustandsdaten im zweiten Schritt (beispielsweise langsam veränderliche und/oder statische Betriebszustandsdaten) oder auch alle Betriebszustandsdaten durch den ersten Datenbanknetzwerkknoten durch asynchrone Replikation an den zweiten Datenbanknetzwerkknoten repliziert. Dabei wird eine Replikation des aktuellen Betriebszustandes des ersten virtuellen Netzwerkfunktionsinstanz generell unterlassen, sofern ein solcher Fehlerzustand und/oder Überlastungszustand der ersten virtuellen Netzwerkfunktionsinstanz nicht vorliegt, wodurch es möglich ist, in besonders effizienter Weise die Menge an übertragenen Daten zwischen Datenbanknetzwerkknoten zu reduzieren und ebenso die Menge an zu verarbeitenden Daten innerhalb eines Datenbanknetzwerkknotens zu reduzieren, was erhebliche Kostenersparnisse und technische Vorteile beim Betrieb der Datenbanknetzwerkknoten mit sich bringt.

Gemäß einer Ausführungsform der Erfindung ist es vorgesehen, dass der erste Datenbanknetzwerkknoten und der zweiten Datenbanknetzwerkknoten räumlich entfernt voneinander lokalisiert sind, insbesondere als geo-redundante Datenbanken.

Hierdurch ist es insbesondere gemäß einer Ausführungsform der vorliegenden Erfindung möglich, ein Verfahren für große Telekommunikationsnetze zur Verfügung zu stellen, bei dem mehrere Datenbanknetzwerkknoten zum Einsatz kommen, die räumlich voneinander entfernt eingerichtet bzw. lokalisiert sind, so dass die Datenübertragung zwischen solchen räumlich voneinander entfernten Datenbanknetzwerkknoten in vorteilhafterweise verringert werden kann und dennoch eine hohe Quality of Service bereitgestellt wird.

Gemäß einer Ausführungsform der Erfindung ist es vorgesehen, dass ein erster Teil der Betriebszustandsdaten gegenüber einem zweiten Teil der Betriebszustandsdaten prioritär vom ersten Datenbanknetzwerkknoten zum zweiten Datenbanknetzwerkknoten repliziert werden oder prioritär zu der zweiten virtuellen Netzwerkfunktionsinstanz übertragen werden, wobei der erste Teil der Betriebszustandsdaten gegenüber dem zweiten Teil der Betriebszustandsdaten in Abhängigkeit von einem oder einer Mehrzahl der nachfolgenden Kriterien bestimmt wird:
-- in Abhängigkeit eines Datentyps der Betriebszustandsdaten,
-- in Abhängigkeit einer Art einer Benutzersitzung [user session] des Benutzerendgeräts oder der Mehrzahl von Benutzerendgeräten,
-- in Abhängigkeit der Häufigkeit einer Benutzerinteraktion des Benutzerendgeräts oder der Mehrzahl von Benutzerendgeräten,
-- in Abhängigkeit eines Dienstqualitätprofils [quality of service profile] des Benutzerendgeräts oder der Mehrzahl von Benutzerendgeräten.

Hierdurch ist es gemäß einer Ausführungsform der vorliegenden Erfindung in vorteilhafterweise möglich, dass ein erster Teil der Betriebszustandsdaten, der beispielsweise für die Übernahme oder Aufrechterhaltung einer Telekommunikationsdienstleistung durch die zweite virtuelle Netzwerkfunktionsinstanz (im Fehlerfall der ersten virtuellen Netzwerkfunktionsinstanz) bevorzugte Wichtigkeit hat, zuerst und/oder schneller vom ersten Datenbanknetzwerkknoten zum zweiten Datenbanknetzwerkknoten repliziert wird (bzw. zu diesem übermittelt wird) als ein zweiter Teil der Betriebszustandsdaten.

Gemäß einer Ausführungsform der Erfindung ist es vorgesehen, dass die Detektion - während des zweiten Schritts und durch den ersten Datenbanknetzwerkknoten oder durch einen anderen Netzwerkknoten des Telekommunikationsnetzes - eines Fehlerzustands und/oder Überlastungszustands der ersten virtuellen Netzwerkfunktionsinstanz aufgrund eines oder mehrerer der nachfolgenden Ereignisse erfolgt:
-- der Abbruch der Verbindung zwischen dem ersten Datenbanknetzwerkknoten zur ersten virtuellen Netzwerkfunktionsinstanz, insbesondere aufgrund einer Generierung eines SIGPIPE-Signals und/oder insbesondere aufgrund eines Auslaufens eines Timeout-Zählers für den Empfang von erwartbaren Folgedaten einer Anfrage,
-- das Ausbleiben eines von der ersten virtuellen Netzwerkfunktionsinstanz regelmäßig übermittelten Signals, insbesondere eines Heartbeat-Signals,
-- eine signifikante Änderung eines Datenverkehrsmusters zwischen der ersten virtuellen Netzwerkfunktionsinstanz und dem ersten Datenbanknetzwerkknoten, insbesondere ein abruptes Absinken einer Rate des Datenverkehrs zwischen der ersten virtuellen Netzwerkfunktionsinstanz und dem ersten Datenbanknetzwerkknoten unter den für die Tageszeit üblichen Wert und/oder unterhalb eines Werts oder Grenzwerts gemäß einer Datenbankstatistik des ersten Datenbanknetzwerkknotens,
-- eine Information über einen Fehlerzustand und/oder einen Überlastungszustand der ersten virtuellen Netzwerkfunktionsinstanz aufgrund eines Überwachungswerkzeugs und/oder eines OAM-Systems (Operations, Administration, Maintenance-System).

Ferner wird die Aufgabe erfindungsgemäß gelöst durch ein Telekommunikationsnetz gemäß Anspruch 8.

Gemäß einer Ausführungsform der Erfindung ist es vorgesehen, dass der erste Datenbanknetzwerkknoten und der zweiten Datenbanknetzwerkknoten räumlich entfernt voneinander lokalisiert sind, insbesondere als geo-redundante Datenbanken.

Ein weiterer - nicht beanspruchter-Offenbarungsgegenstand ist ein Datenbanknetzwerkknoten geeignet zur Nutzung als erster Datenbanknetzwerkknoten oder als zweiter Datenbanknetzwerkknoten innerhalb eines Telekommunikationsnetzes nach einer der Ausführungsformen der vorliegenden Erfindung.

Des Weiteren wird die Aufgabe erfindungsgemäß gelöst durch ein Computerprogramm mit Programmcodemitteln, mit deren Hilfe die Schritte eines Verfahrens nach einer Ausführungsform der vorliegenden Erfindung durchführbar sind, wenn das Computerprogramm auf einer programmierbaren Einrichtung als Teil des Telekommunikationsnetzes wird.

Die Aufgabe wird erfindungsgemäß auch gelöst durch ein Computerprogrammprodukt mit einem computerlesbaren Medium und einem auf dem computerlesbaren Medium gespeicherten Computerprogramm mit Programmcodemitteln zum verbesserten Betrieb eines Telekommunikationsnetzes durch Nutzung von Netzwerkfunktionsvirtualisierung innerhalb des Telekommunikationsnetzes, die dazu geeignet sind, dass die Schritte eines Verfahrens nach einer Ausführungsform der vorliegenden Erfindung durchführbar sind, wenn das Computerprogramm auf einer programmierbaren Einrichtung als Teil des Telekommunikationsnetzes ausgeführt wird.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

Figur 1 zeigt schematisch ein Telekommunikationsnetz gemäß einer Ausführungsform der vorliegenden Erfindung.
Figur 2 zeigt schematisch ein Kernnetz gemäß einem Telekommunikationsnetz gemäß einer Ausführungsform der vorliegenden Erfindung.
Figur 3 zeigt schematisch einen Teil eines Telekommunikationsnetzes gemäß einer Ausführungsform der vorliegenden Erfindung.

### Ausführungsformen der Erfindung

Die vorliegende Erfindung wird mit Bezug auf besondere Ausführungen und mit Bezug zu den beiliegenden Zeichnungen beschrieben, wobei jedoch die Erfindung nicht auf diese Ausführungen und auf diese Zeichnungen beschränkt ist, sondern durch die Patentansprüche bestimmt ist. Die Zeichnungen sind nicht beschränkend zu. In den Zeichnungen können zu Darstellungszwecken bestimmte Elemente vergrößert bzw. übertrieben sowie nicht maßstabsgerecht dargestellt sein.

Falls nichts anderes spezifisch angegeben wird, umfasst die Verwendung eines unbestimmten oder bestimmten Artikels mit Bezug auf ein Wort in der Einzahl, beispielsweise "ein", "eine", "eines", "der", "die", "das", auch die Mehrzahl eines solchen Wortes. Die Bezeichnungen "erster", "erste", "erstes", "zweiter", "zweite", "zweites" und so fort in der Beschreibung und in den Ansprüchen werden zur Unterscheidung zwischen ähnlichen oder zu unterscheidenden gleichen Elementen verwendet und nicht zwingend zur Beschreibung einer zeitlichen oder sonstigen Abfolge. Die derart benutzten Begriffe sind grundsätzlich als unter entsprechenden Bedingungen austauschbar anzusehen.

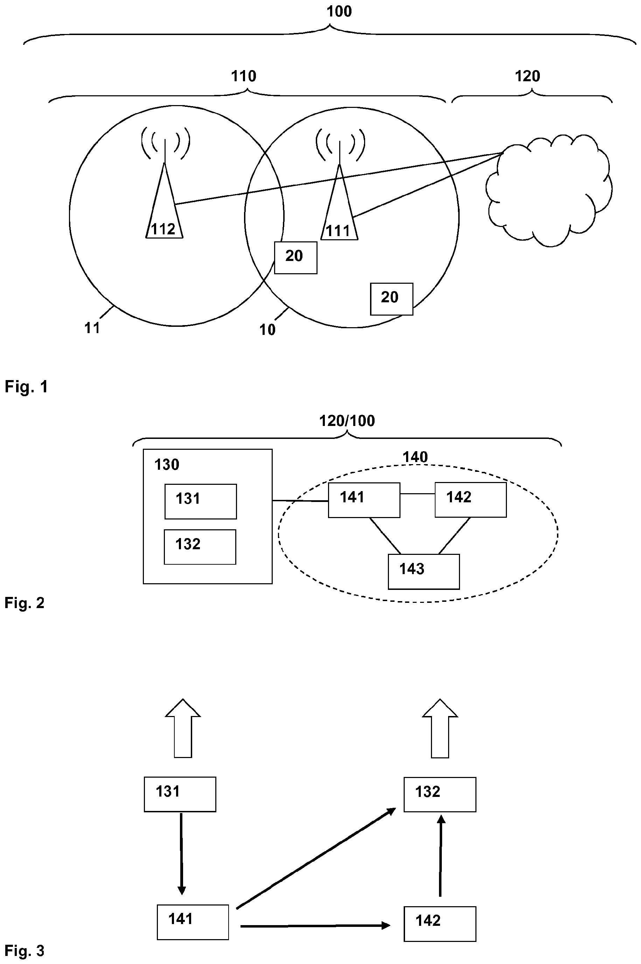

In Figur 1 ist schematisch ein Telekommunikationsnetz 100 gemäß einer Ausführungsform der vorliegenden Erfindung dargestellt. Das Telekommunikationsnetz 100 umfasst typischerweise eine Mehrzahl von Benutzerendgeräten 20. Das Telekommunikationsnetz 100 ist dazu ausgebildet, Netzwerkfunktionsvirtualisierung zum verbesserten Betrieb des Telekommunikationsnetzes 100 zu verwenden. Insbesondere weist das Telekommunikationsnetz 100 ein Kernnetz 120 und ein Zugangsnetz 110 auf. Das Zugangsnetz 110 umfasst typischerweise eine Mehrzahl von Basisstationen 111, 112, welche Funkzellen 11, 12 des Telekommunikationsnetzes 100 bedienen. Das Telekommunikationsnetz 100 ist derart ausgebildet, dass das Telekommunikationsnetz 100 den Benutzerendgeräten 20 Telekommunikationsdienste unter Zuhilfenahme einer Mehrzahl von virtuellen Netzwerkfunktionsinstanzen 130 bereitstellen kann. Es ist insbesondere möglich, dass es sich bei den virtuellen Netzwerkfunktionsinstanzen 130 um state less und/oder data less virtuelle Netzwerkfunktionsinstanzen (VNF) handelt.

In Figur 2 ist schematisch ein Telekommunikationsnetz 100, insbesondere ein Kernnetz 120 des Telekommunikationsnetzes 100, gemäß einer Ausführungsform der vorliegenden Erfindung gezeigt. Das Telekommunikationsnetz 100 umfasst eine Datenbankfunktionalität 140, welche mehrere Datenbanknetzwerkknoten 141, 142, 143 aufweist. Im Speziellen sind ein erster Datenbanknetzwerkknoten 141, ein zweiter Datenbanknetzwerkknoten 142 und ein dritter Datenbanknetzwerkknoten 143 dargestellt. Zwischen den Datenbanknetzwerkknoten 141, 142, 143 bestehen Verbindungen zur Datenübermittlung. Des Weiteren umfasst das Telekommunikationsnetz 100 eine Mehrzahl von virtuellen Netzwerkfunktionsinstanzen 130. Mithilfe der Mehrzahl von virtuellen Netzwerkfunktionsinstanzen 130 ist es möglich, dass der Mehrzahl von Benutzerendgeräten 20 eine Mehrzahl von Telekommunikationsdiensten bereitgestellt werden. Bevorzugt handelt es sich bei der Mehrzahl von virtuellen Netzwerkfunktionsinstanzen 130 jeweils um data less und state less Netzwerkfunktionsinstanzen 130, wobei es ebenso möglich ist, dass nur einige der Mehrzahl von virtuellen Netzwerkfunktionsinstanzen 130 state less und/oder data less sind. Die Mehrzahl der virtuellen Netzwerkfunktionsinstanzen 130 besteht mindestens aus einer ersten virtuellen Netzwerkfunktionsinstanzen 131 und einer zweiten virtuellen Netzwerkfunktionsinstanzen 132. Es ist möglich, dass die erste virtuelle Netzwerkfunktionsinstanz 131 - in einem ersten Schritt - zum Bereitstellen eines bestimmten Telekommunikationsdienstes aus der Mehrzahl von Telekommunikationsdiensten an eines oder eine Mehrzahl von Benutzerendgeräten 20 verwendet wird. Die dem (aktuellen) Betriebszustand entsprechenden Betriebszustandsdaten der ersten virtuellen Netzwerkfunktionsinstanz 131 werden dabei kontinuierlich (bzw. zumindest dann, wenn sie sich ändern) an den ersten Datenbanknetzwerkknoten 141 übertragen (von der ersten virtuellen Netzwerkfunktionsinstanz 131) und dort gespeichert. Die zweite virtuelle Netzwerkfunktionsinstanz 132 ist derart ausgebildet, dass sie im Fall eines Ausfalls oder einer Überlastung der ersten virtuellen Netzwerkfunktionsinstanzen 131 deren Funktion bei der Bereitstellung des Telekommunikationsdienstes aus der Mehrzahl von Telekommunikationsdiensten an eines oder eine Mehrzahl von Benutzerendgeräten 20 übernehmen kann. Dazu benötigt die zweite virtuelle Netzwerkfunktionsinstanz 132 allerdings die aktuellen Betriebszustandsdaten der ersten virtuellen Netzwerkfunktionsinstanz 131. Bevorzugt ist der zweiten virtuellen Netzwerkfunktionsinstanz 132 keiner der mehreren Datenbanknetzwerkknoten 141, 142, 143 fest zugeordnet. Es ist also möglich, dass die zweite virtuelle Netzwerkfunktionsinstanz 132 von (irgend)einem der mehreren Datenbanknetzwerkknoten 141, 142, 143 die aktuellen Betriebszustandsdaten anfordert und/oder von irgendeinem der mehreren Datenbanknetzwerkknoten 141, 142, 143 übermittelt bekommt (insbesondere während eines dritten Schritts). Damit dies möglich ist, wird - während eines zweiten Schritts - wenigstens ein Teil der Betriebszustandsdaten vom ersten Datenbanknetzwerkknoten 141 zum zweiten Datenbanknetzwerkknoten 142 repliziert. Erfindungsgemäß findet der zweite Schritt nur dann statt, wenn ein Fehler oder eine Überlastung der ersten virtuellen Netzwerkfunktionsinstanz 131 detektiert wird. Es ist also erfindungsgemäß so, dass die aktuellen Betriebszustandsdaten nicht kontinuierlich (oder mit festgelegter Frequenz) von dem ersten Datenbanknetzwerkknoten 141 an den zweiten Datenbanknetzwerkknoten 142 repliziert werden und dennoch im Falle eines Fehlers oder einer Überlastung der ersten virtuellen Netzwerkfunktionsinstanz 131 die Betriebszustandsdaten an die zweite virtuelle Netzwerkfunktionsinstanz 132 übermittelt werden können (während eines dritten Schritts). Dadurch kann die zweite virtuelle Netzwerkfunktionsinstanz 132 zum Bereitstellen des bestimmten Telekommunikationsdienstes an das Benutzerendgerät 20 oder die Mehrzahl von Benutzerendgeräten 20 im dritten Schritt (insbesondere nach dem Erhalt der Betriebszustandsdaten) verwendet werden.

In Figur 3 ist schematisch ein Teil eines Telekommunikationsnetzes 100 gemäß einer Ausführungsform der vorliegenden Erfindung gezeigt. Das Telekommunikationsnetz 100 umfasst eine Datenbankfunktionalität 140, welche mehrere Datenbanknetzwerkknoten 141, 142 aufweist. Im Speziellen sind ein erster Datenbanknetzwerkknoten 141 und ein zweiter Datenbanknetzwerkknoten 142 dargestellt. in einem ersten Schritt wird - zum Bereitstellen eines bestimmten Telekommunikationsdienstes für mindestens ein Benutzerendgerät 20 - eine erste virtuelle Netzwerkfunktionsinstanz 131 verwendet, wobei die erste virtuelle Netzwerkfunktionsinstanz 131 dem (momentanen bzw. aktuellen) Betriebszustand entsprechende Betriebszustandsdaten aufweist/verwendet, wobei die Betriebszustandsdaten insbesondere dem Betriebszustand der ersten virtuellen Netzwerkfunktionsinstanz 131 entsprechen bzw. diesen widergeben. Diese Betriebszustandsdaten werden an den ersten Datenbanknetzwerkknoten 141 übertragen (während des ersten Schritts), so dass die erste Datenbanknetzwerkknoten 141 immer (während des Normalbetriebs der ersten virtuellen Netzwerkfunktionsinstanz 131) die aktuellen Betriebszustandsdaten der ersten virtuellen Netzwerkfunktionsinstanz 131 speichert und/oder aufweist. In einem zweiten Schritt (insbesondere nach bzw. anschließend an den ersten Schritt) wird wenigstens ein Teil der Betriebszustandsdaten vom ersten Datenbanknetzwerkknoten 141 zum zweiten Datenbanknetzwerkknoten 142 repliziert, allerdings nur dann, wenn ein Fehler oder eine Überlastung der ersten virtuellen Netzwerkfunktionsinstanz 131 detektiert wird. Die Detektion des Fehlers oder der Überlastung der ersten virtuellen Netzwerkfunktionsinstanz 131(während des zweiten Schritts) kann durch den ersten Datenbanknetzwerkknoten 141 oder durch einen anderen Netzwerkknoten des Telekommunikationsnetzes 100 stattfinden und durch eines oder mehrere der folgenden Ereignisse ausgelöst werden:
-- Abbruch der Verbindung zwischen dem ersten Datenbanknetzwerkknoten 141 und der ersten virtuellen Netzwerkfunktionsinstanz 131, insbesondere aufgrund einer Generierung eines SIGPIPE-Signals und/oder insbesondere aufgrund eines Auslaufens eines Timeout-Zählers für den Empfang von erwartbaren Folgedaten einer Anfrage,
-- Ausbleiben eines von der ersten virtuellen Netzwerkfunktionsinstanz 131 regelmäßig übermittelten Signals, insbesondere eines Heartbeat-Signals,
-- signifikante Änderung eines Datenverkehrsmusters zwischen der ersten virtuellen Netzwerkfunktionsinstanz 131 und dem ersten Datenbanknetzwerkknoten 141, insbesondere ein abruptes Absinken einer Rate des Datenverkehrs zwischen der ersten virtuellen Netzwerkfunktionsinstanz 131 und dem ersten Datenbanknetzwerkknoten 141 unter den für die Tageszeit üblichen Wert (Referenzwert) und/oder unterhalb eines Werts oder Grenzwerts gemäß einer Datenbankstatistik des ersten Datenbanknetzwerkknotens 141,
-- Information über einen Fehlerzustand und/oder einen Überlastungszustand der ersten virtuellen Netzwerkfunktionsinstanz 131 aufgrund eines Überwachungswerkzeugs und/oder eines OAM-Systems (Operations, Administration, Maintenance-System).

Die Betriebszustandsdaten (des aktuellen Betriebszustands der ersten virtuellen Netzwerkfunktionsinstanz 131) werden also nicht kontinuierlich während des ersten Schritts an den zweiten Datenbanknetzwerkknoten 142 übertragen/repliziert. Trotzdem ist es möglich, dass in einem dem zweiten Schritt nachfolgenden dritten Schritt die Betriebszustandsdaten zu der zweiten virtuellen Netzwerkfunktionsinstanz 132 (welche demnach insbesondere als redundantes VNF bzw. Failover VNF für die erste virtuelle Netzwerkfunktionsinstanz 131 verwendbar ist) übertragen oder von der zweiten virtuellen Netzwerkfunktionsinstanz 132 angefordert werden. Es ist erfindungsgemäß demnach möglich, dass die zweite virtuelle Netzwerkfunktionsinstanz 132 die Betriebszustandsdaten von dem ersten oder zweiten Datenbanknetzwerkknoten 141, 142 erhält oder die Betriebszustandsdaten von dem ersten oder zweiten Datenbanknetzwerkknoten 141, 142 anfragt. Im Folgenden wird die zweite virtuelle Netzwerkfunktionsinstanz 132 zum Bereitstellen des bestimmten Telekommunikationsdienstes an das Benutzerendgerät 20 oder die Mehrzahl von Benutzerendgeräten 20 verwendet und übernimmt damit die (vorherige) Funktion der ersten virtuellen Netzwerkfunktionsinstanz 131 bei der Bereitstellung des Telekommunikationsdienste. In nicht beanspruchten Alternativen wäre es auch denkbar, dass während des zweiten Schritts der zweiten virtuellen Netzwerkfunktionsinstanz 132 eine Referenzinformation auf den Speicherort der Betriebszustandsdaten übertragen wird (so dass diese dann die Betriebszustandsdaten von dem referenzierten Speicherort anfragen/erhalten kann), oder dass während des zweiten Schritts die zweite virtuelle Netzwerkfunktionsinstanz 132 eine Anfrage - insbesondere eine Rundsendeanfrage [broadcast request] - zur Ermittlung des Speicherorts der Betriebszustandsdaten oder zum Erhalt einer Referenzinformation auf den Speicherort der Betriebszustandsdaten an den ersten und/oder zweiten Datenbanknetzwerkknoten 141, 142 überträgt (so dass diese dann die Betriebszustandsdaten von dem referenzierten Speicherort anfragen/erhalten kann).

## Patentansprüche

1. Verfahren zum verbesserten Betrieb eines Telekommunikationsnetzes (100), umfassend eine Mehrzahl von Benutzerendgeräten (20), durch Nutzung von Netzwerkfunktionsvirtualisierung innerhalb des Telekommunikationsnetzes (100),
wobei das Telekommunikationsnetz (100) der Mehrzahl von Benutzerendgeräten (20) eine Mehrzahl von Telekommunikationsdiensten mittels einer Mehrzahl von virtuellen Netzwerkfunktionsinstanzen (130) bereitstellt,
wobei das Telekommunikationsnetz (100) eine Datenbankfunktionalität (140) umfassend einen ersten Datenbanknetzwerkknoten (141) und wenigstens einen zweiten Datenbanknetzwerkknoten (142) aufweist, wobei das Verfahren die nachfolgenden Schritte umfasst:
-- in einem ersten Schritt wird - zum Bereitstellen eines bestimmten Telekommunikationsdienstes aus der Mehrzahl von Telekommunikationsdiensten an eines oder eine Mehrzahl von Benutzerendgeräten (20) - eine erste virtuelle Netzwerkfunktionsinstanz (131) verwendet, wobei die erste virtuelle Netzwerkfunktionsinstanz (131) dem Betriebszustand entsprechende Betriebszustandsdaten umfasst, wobei die Betriebszustandsdaten dem Betriebszustand der ersten virtuellen Netzwerkfunktionsinstanz (131) entsprechen und wobei diese Betriebszustandsdaten an den ersten Datenbanknetzwerkknoten (141) übertragen werden,
-- in einem dem ersten Schritt nachfolgenden zweiten Schritt wird - im Falle der Detektion eines Fehlerzustands und/oder Überlastungszustands der ersten virtuellen Netzwerkfunktionsinstanz (131) durch den ersten Datenbanknetzwerkknoten (141) oder durch einen anderen Netzwerkknoten des Telekommunikationsnetzes (100) - eine zweite virtuelle Netzwerkfunktionsinstanz (132) bereitgestellt,
-- in einem dem zweiten Schritt nachfolgenden dritten Schritt werden die Betriebszustandsdaten zu der zweiten virtuellen Netzwerkfunktionsinstanz (132) übertragen oder von der zweiten virtuellen Netzwerkfunktionsinstanz (132) angefordert und es wird die zweite virtuelle Netzwerkfunktionsinstanz (132) zum Bereitstellen des bestimmten Telekommunikationsdienstes an das Benutzerendgerät (20) oder die Mehrzahl von Benutzerendgeräten (20) verwendet,
**dadurch gekennzeichnet, dass** während des zweiten Schritts wenigstens ein Teil der Betriebszustandsdaten vom ersten Datenbanknetzwerkknoten (141) zum zweiten Datenbanknetzwerkknoten (142) repliziert wird, wobei die Betriebszustandsdaten ausschließlich bei Detektion des Fehlerzustands und/oder Überlastungszustands der ersten virtuellen Netzwerkfunktionsinstanz (131) repliziert werden.

2. Verfahren nach Anspruch 1, **dadurch gekennzeichnet, dass** die Betriebszustandsdaten im dritten Schritt vom ersten Datenbanknetzwerkknoten (141) oder vom zweiten Datenbanknetzwerkknoten (142) zur zweiten virtuellen Netzwerkfunktionsinstanz (132) übertragen werden, insbesondere in Abhängigkeit davon, ob die zweite virtuelle Netzwerkfunktionsinstanz (132) die Betriebszustandsdaten vom ersten Datenbanknetzwerkknoten (141) oder vom zweiten Datenbanknetzwerkknoten (142) anfordert.

3. Verfahren nach einem der vorhergehenden Ansprüche, **dadurch gekennzeichnet, dass** die Betriebszustandsdaten Subskriptionsdaten , Sitzungsdaten und/oder Anrufzustandsdaten umfassen, wobei wenigstens ein Teil der Sitzungsdaten und/oder der Anrufzustandsdaten während des zweiten Schritts vom ersten Datenbanknetzwerkknoten (141) zum zweiten Datenbanknetzwerkknoten (142) repliziert werden.

4. Verfahren nach einem der vorhergehenden Ansprüche, **dadurch gekennzeichnet, dass** die Betriebszustandsdaten im ersten Schritt durch die erste virtuelle Netzwerkfunktionsinstanz (131) und im Wesentlichen kontinuierlich an den ersten Datenbanknetzwerkknoten (141) übertragen werden.

5. Verfahren nach einem der vorhergehenden Ansprüche, **dadurch gekennzeichnet, dass** der erste Datenbanknetzwerkknoten (141) und der zweiten Datenbanknetzwerkknoten (142) räumlich entfernt voneinander lokalisiert sind, insbesondere als geo-redundante Datenbanken.

6. Verfahren nach einem der vorhergehenden Ansprüche, **dadurch gekennzeichnet, dass** ein erster Teil der Betriebszustandsdaten gegenüber einem zweiten Teil der Betriebszustandsdaten prioritär vom ersten Datenbanknetzwerkknoten (141) zum zweiten Datenbanknetzwerkknoten (142) repliziert werden oder prioritär zu der zweiten virtuellen Netzwerkfunktionsinstanz (132) übertragen werden, wobei der erste Teil der Betriebszustandsdaten gegenüber dem zweiten Teil der Betriebszustandsdaten in Abhängigkeit von einem oder einer Mehrzahl der nachfolgenden Kriterien bestimmt wird:
-- in Abhängigkeit eines Datentyps der Betriebszustandsdaten,
-- in Abhängigkeit einer Art einer Benutzersitzung des Benutzerendgeräts (20) oder der Mehrzahl von Benutzerendgeräten (20),
-- in Abhängigkeit der Häufigkeit einer Benutzerinteraktion des Benutzerendgeräts (20) oder der Mehrzahl von Benutzerendgeräten (20),
-- in Abhängigkeit eines Dienstqualitätprofils des Benutzerendgeräts (20) oder der Mehrzahl von Benutzerendgeräten (20).

7. Verfahren nach einem der vorhergehenden Ansprüche, **dadurch gekennzeichnet, dass** die Detektion - während des zweiten Schritts und durch den ersten Datenbanknetzwerkknoten (141) oder durch einen anderen Netzwerkknoten des Telekommunikationsnetzes (100) - eines Fehlerzustands und/oder Überlastungszustands der ersten virtuellen Netzwerkfunktionsinstanz (131) aufgrund eines oder mehrerer der nachfolgenden Ereignisse erfolgt:
-- der Abbruch der Verbindung zwischen dem ersten Datenbanknetzwerkknoten (141) zur ersten virtuellen Netzwerkfunktionsinstanz (131), insbesondere aufgrund einer Generierung eines SIGPIPE-Signals und/oder insbesondere aufgrund eines Auslaufens eines Timeout-Zählers für den Empfang von erwartbaren Folgedaten einer Anfrage,
-- das Ausbleiben eines von der ersten virtuellen Netzwerkfunktionsinstanz (131) regelmäßig übermittelten Signals, insbesondere eines Heartbeat-Signals,
-- eine signifikante Änderung eines Datenverkehrsmusters zwischen der ersten virtuellen Netzwerkfunktionsinstanz (131) und dem ersten Datenbanknetzwerkknoten (141), insbesondere ein abruptes Absinken einer Rate des Datenverkehrs zwischen der ersten virtuellen Netzwerkfunktionsinstanz (131) und dem ersten Datenbanknetzwerkknoten (141) unter den für die Tageszeit üblichen Wert und/oder unterhalb eines Werts oder Grenzwerts gemäß einer Datenbankstatistik des ersten Datenbanknetzwerkknotens (141),
-- eine Information über einen Fehlerzustand und/oder einen Überlastungszustand der ersten virtuellen Netzwerkfunktionsinstanz (131) aufgrund eines Überwachungswerkzeugs und/oder eines OAM-, d.h. Operations, Administration, Maintenance-Systems.

8. Telekommunikationsnetz (100), umfassend eine Mehrzahl von Benutzerendgeräten (20) und unter Nutzung von Netzwerkfunktionsvirtualisierung zum verbesserten Betrieb des Telekommunikationsnetzes (100), wobei das Telekommunikationsnetz (100) der Mehrzahl von Benutzerendgeräten (20) eine Mehrzahl von Telekommunikationsdiensten mittels einer Mehrzahl von virtuellen Netzwerkfunktionsinstanzen (130) bereitstellt,
wobei das Telekommunikationsnetz (100) eine Datenbankfunktionalität (140) umfassend einen ersten Datenbanknetzwerkknoten (141) und wenigstens einen zweiten Datenbanknetzwerkknoten (142) aufweist, wobei das Telekommunikationsnetz (100) eine erste virtuelle Netzwerkfunktionsinstanz (131) umfasst, wobei das Telekommunikationsnetz (100) derart konfiguriert ist, dass:
-- die erste virtuelle Netzwerkfunktionsinstanz (131) - zum Bereitstellen eines bestimmten Telekommunikationsdienstes aus der Mehrzahl von Telekommunikationsdiensten an eines oder eine Mehrzahl von Benutzerendgeräten (20) - verwendet wird, wobei die erste virtuelle Netzwerkfunktionsinstanz (131) dem Betriebszustand entsprechende Betriebszustandsdaten umfasst, wobei die Betriebszustandsdaten dem Betriebszustand der ersten virtuellen Netzwerkfunktionsinstanz (131) entsprechen und wobei diese Betriebszustandsdaten an den ersten Datenbanknetzwerkknoten (141) übertragen werden,
-- im Falle der Detektion eines Fehlerzustands und/oder Überlastungszustands der ersten virtuellen Netzwerkfunktionsinstanz (131) durch den ersten Datenbanknetzwerkknoten (141) oder durch einen anderen Netzwerkknoten des Telekommunikationsnetzes (100), eine zweite virtuelle Netzwerkfunktionsinstanz (132) bereitgestellt wird, wobei die das Telekommunikationsnetz (100) die zweite virtuelle Netzwerkfunktionsinstanz (132) umfasst,
-- die Betriebszustandsdaten zu der zweiten virtuellen Netzwerkfunktionsinstanz (132) übertragen oder von der zweiten virtuellen Netzwerkfunktionsinstanz (132) angefordert werden und die zweite virtuelle Netzwerkfunktionsinstanz (132) zum Bereitstellen des bestimmten Telekommunikationsdienstes an das Benutzerendgerät (20) oder die Mehrzahl von Benutzerendgeräten (20) verwendet wird,
**dadurch gekennzeichnet, dass** das Telekommunikationsnetz (100) ferner derart konfiguriert ist, dass im Falle der Detektion eines Fehlerzustands und/oder Überlastungszustands der ersten virtuellen Netzwerkfunktionsinstanz (131) durch den ersten Datenbanknetzwerkknoten (141) oder durch einen anderen Netzwerkknoten des Telekommunikationsnetzes (100) wenigstens ein Teil der Betriebszustandsdaten vom ersten Datenbanknetzwerkknoten (141) zum zweiten Datenbanknetzwerkknoten (142) repliziert werden, wobei die Betriebszustandsdaten ausschließlich bei Detektion des Fehlerzustands und/oder Überlastungszustands der ersten virtuellen Netzwerkfunktionsinstanz (131) repliziert werden.

9. Telekommunikationsnetz (100) nach Anspruch 8, **dadurch gekennzeichnet, dass** der erste Datenbanknetzwerkknoten (141) und der zweiten Datenbanknetzwerkknoten (142) räumlich entfernt voneinander lokalisiert sind, insbesondere als geo-redundante Datenbanken.

10. Computerprogramm mit Programmcodemitteln, mit deren Hilfe die Schritte eines Verfahrens nach einem der Ansprüche 1 bis 7 durchführbar sind, wenn das Computerprogramm auf einer programmierbaren Einrichtung als Teil des Telekommunikationsnetzes (100) ausgeführt wird.

11. Computerprogrammprodukt mit einem computerlesbaren Medium und einem auf dem computerlesbaren Medium gespeicherten Computerprogramm mit Programmcodemitteln zum verbesserten Betrieb eines Telekommunikationsnetzes (100) durch Nutzung von Netzwerkfunktionsvirtualisierung innerhalb des Telekommunikationsnetzes (100), die dazu geeignet sind, dass die Schritte eines Verfahrens nach einem der Ansprüche 1 bis 7 durchführbar sind, wenn das Computerprogramm auf einer programmierbaren Einrichtung als Teil des Telekommunikationsnetzes (100) ausgeführt wird.

## Claims

1. Method for improved operation of a telecommunications network (100) comprising a plurality of user terminals (20), using network function virtualisation within the telecommunications network (100),
the telecommunications network (100) providing the plurality of user terminals (20) with a plurality of telecommunications services by means of a plurality of virtual network function instances (130),
the telecommunications network (100) having a database functionality (140) comprising a first database network node (141) and at least one second database network node (142), the method comprising the following steps:
- in a first step, so as to provide a specific telecommunications service from the plurality of telecommunications services to one or more user terminals (20), a first virtual network function instance (131) is used, the first virtual network function instance (131) comprising operating state data corresponding to the operating state, the operating state data corresponding to the operating state of the first virtual network function instance (131) and these operating state data being transmitted to the first database network node (141),
- in a second step following the first step, if a fault state and/or overload state of the first virtual network function instance (131) are detected by the first database network node (141) or by another network node of the telecommunications network (100), a second virtual network function instance (132) is provided,
- in a third step following the second step, the operating state data are transmitted to the second virtual network function instance (132) or requested by the second virtual network function instance (132), and the second virtual network function instance (132) is used to provide the specific telecommunications service to the user terminal (20) or plurality of user terminals (20),
**characterised in that** during the second step at least some of the operating state data are replicated from the first database network node (141) to the second database network node (142), the operating state data being replicated only if the fault state and/or overload state of the first virtual network function instance (131) are detected.

2. Method according to claim 1, **characterised in that** in the third step the operating state data are transmitted from the first database network node (141) or second database network node (142) to the second virtual network function instance (132), in particular as a function of whether the second virtual network function instance (132) requests the operating state data from the first database network node (141) or from the second database network node (142).

3. Method according to any of the preceding claims, **characterised in that** the operating state data comprise subscription data, session data and/or call status data, at least some of the session data and/or call status data being replicated from the first database network node (141) to the second database network node (142) during the second step.

4. Method according to any of the preceding claims, **characterised in that** in the first step the operating state data are transmitted to the first database network node (141) substantially continuously by the first virtual network function instance (131).

5. Method according to any of the preceding claims, **characterised in that** the first database network node (141) and second database network node (142) are located spatially remote from one another, in particular as georedundant databases.

6. Method according to any of the preceding claims, **characterised in that** a first set of the operating state data are replicated from the first database network node (141) to the second database network node (142) with priority, or transmitted to the second virtual network function instance (132) with priority, over a second set of the operating state data, the first set of the operating state data being determined, in opposition to the second set of operating state data, as a function of one or more of the following criteria:
- as a function of a data type of the operating state data,
- as a function of a type of user session of the user terminal (20) or plurality of user terminals (20),
- as a function of the frequency of a user interaction of the user terminal (20) or plurality of user terminals (20),
- as a function of a service quality profile of the user terminal (20) or plurality of user terminals (20).

7. Method according to any of the preceding claims, **characterised in that** the detection of an error state and/or overload state of the first virtual network function instance (131), performed by the first database network node (141) or another network node of the telecommunications network (100) during the second step, takes place on the basis of one or more of the following events:
- interruption of the connection from the first database network node (141) to the first virtual network function instance (131), in particular due to generation of a SIGPIPE signal and/or in particular due to expiry of a timeout counter for the receipt of expected follow-up data to a query,
- absence of a signal regularly transmitted by the first virtual network function instance (131), in particular a heartbeat signal,
- a significant change in a data traffic pattern between the first virtual network function instance (131) and the first database network node (141), in particular an abrupt fall in a data traffic rate between the first virtual network function instance (131) and the first database network node (141) below the value usual for the time of day and/or below a value or boundary value in accordance with a database statistic of the first database network node (141),
- a piece of information concerning a fault state and/or overload state of the first virtual network function instance (131) due to a monitoring tool and/or an OAM (operations, administration, maintenance) system.

8. Telecommunications network (100), comprising a plurality of user terminals (20) and using network function virtualisation for improved operation of the telecommunications network (100), the telecommunications network (100) providing the plurality of user terminals (20) with a plurality of telecommunications services by means of a plurality of virtual network function instances (130),
the telecommunications network (100) having a database functionality (140) comprising a first database network node (141) and at least one second database network node (142), the telecommunications network (100) comprising a first virtual network function instance (131), the telecommunications network (100) being configured in such a way that:
- the first virtual network function instance (131) is used so as to provide a specific telecommunications service from the plurality of telecommunications services to one or more user terminals (20), the first virtual network function instance (131) comprising operating state data corresponding to the operating state, the operating state data corresponding to the operating state of the first virtual network function instance (131) and these operating state data being transmitted to the first database network node (141),
- if a fault state and/or overload state of the first virtual network function instance (131) are detected by the first database network node (141) or by another network node of the telecommunications network (100), a second virtual network function instance (132) is provided, the telecommunications network (100) comprising the second virtual network function instance (132),
- the operating state data are transmitted to the second virtual network function instance (132) or requested by the second virtual network function instance (132), and the second virtual network function instance (132) is used to provide the specific telecommunications service to the user terminal (20) or plurality of user terminals (20),
**characterised in that** the telecommunications network (100) is further configured in such a way that, if a fault state and/or overload state of the first virtual network function instance (131) are detected by the first database network node (141) or another network node of the telecommunications network (100), at least some of the operating state data are replicated from the first database network node (141) to the second database network node (142), the operating state data being replicated only if the fault state and/or overload state of the first virtual network function instance (131) are detected.

9. Telecommunications network (100) according to claim 8, **characterised in that** the first database network node (141) and second database network node (142) are located spatially remote from one another, in particular as georedundant databases.

10. Computer program comprising program coding means by way of which the steps of a method according to any of claims 1 to 7 can be carried out when the computer program is run on a programmed device as part of the telecommunications network (100).

11. Computer program product comprising a computer-readable medium and a computer program stored on the computer-readable medium, comprising program coding means for improved operation of a telecommunications network (100) by using network function virtualisation within the telecommunications network (100), which are suitable for the steps of a method according to any of claims 1 to 7 to be able to be carried out when the computer program is run on a programmable device as part of the telecommunications network (100).

## Revendications

1. Procédé pour améliorer le fonctionnement d'un réseau de télécommunications (100),
comprenant une pluralité de terminaux d'utilisateur (20), en utilisant la virtualisation des fonctions réseau au sein du réseau de télécommunications (100),
le réseau de télécommunications (100) mettant à la disposition de la pluralité de terminaux d'utilisateur (20) une pluralité de services de télécommunication au moyen d'une pluralité d'instances de fonction réseau virtuelles (130),
le réseau de télécommunications (100) présentant une fonctionnalité de base de données (140) comprenant un premier nœud de réseau de base de données (141) et au moins un deuxième nœud de réseau de base de données (142), le procédé comprenant les étapes suivantes :
- dans une première étape, une première instance de fonction réseau virtuelle (131) est utilisée pour mettre un service de télécommunication défini parmi la pluralité de services de télécommunication à la disposition d'un ou d'une pluralité de terminaux d'utilisateur (20), la première instance de fonction réseau virtuelle (131) comprenant des données d'état de fonctionnement correspondant à l'état de fonctionnement, les données d'état de fonctionnement correspondant à l'état de fonctionnement de la première instance de fonction réseau virtuelle (131) et ces données d'état de fonctionnement étant transmises au premier nœud de réseau de base de données (141),
- dans une deuxième étape suivant la première étape, en cas de détection d'un état de défaut et/ou d'un état de surcharge de la première instance de fonction réseau virtuelle (131) par le premier nœud de réseau de base de données (141) ou par un autre nœud de réseau du réseau de télécommunications (100), une deuxième instance de fonction réseau virtuelle (132) est mise à disposition,
- dans une troisième étape suivant la deuxième étape, les données d'état de fonctionnement sont transmises à la deuxième instance de fonction réseau virtuelle (132) ou demandées par la deuxième instance de fonction réseau virtuelle (132) et la deuxième instance de fonction réseau virtuelle (132) est utilisée pour mettre le service de télécommunication défini à la disposition du terminal d'utilisateur (20) ou de la pluralité de terminaux d'utilisateur (20), **caractérisé en ce que**, pendant la deuxième étape, au moins une partie des données d'état de fonctionnement est répliquée du premier nœud de réseau de base de données (141) au deuxième nœud de réseau de base de données (142), les données d'état de fonctionnement étant répliquées exclusivement en cas de détection de l'état de défaut et/ou de l'état de surcharge de la première instance de fonction réseau virtuelle (131).

2. Procédé selon la revendication 1, **caractérisé en ce que** les données d'état de fonctionnement sont transmises à la troisième étape du premier nœud de réseau de base de données (141) ou du deuxième nœud de réseau de base de données (142) à la deuxième instance de fonction réseau virtuelle (132), en particulier selon que la deuxième instance de fonction réseau virtuelle (132) demande les données d'état de fonctionnement au premier nœud de réseau de base de données (141) ou au deuxième nœud de réseau de base de données (142).

3. Procédé selon l'une des revendications précédentes, **caractérisé en ce que**
**en ce que** les données d'état de fonctionnement comprennent des données d'abonnement , des données de session et/ou des données d'état d'appel, au moins une partie des données de session et/ou des données d'état d'appel étant répliquées du premier nœud de réseau de base de données (141) au deuxième nœud de réseau de base de données (142) pendant la deuxième étape.

4. Procédé selon l'une des revendications précédentes, **caractérisé en ce que** les données d'état de fonctionnement sont transmises à la première étape par la première instance de fonction réseau virtuelle (131) et de manière sensiblement continue au premier nœud de réseau de base de données (141).

5. Procédé selon l'une des revendications précédentes, **caractérisé en ce que**
**en ce que** le premier nœud de réseau de base de données (141) et le deuxième nœud de réseau de base de données (142) sont localisés à distance l'un de l'autre dans l'espace, en particulier sous la forme de bases de données géo-redondantes.

6. Procédé selon l'une des revendications précédentes, **caractérisé en ce qu'**une première partie des données d'état de fonctionnement par rapport à une deuxième partie des données d'état de fonctionnement est répliquée en priorité du premier nœud de réseau de base de données (141) au deuxième nœud de réseau de base de données (142) ou est transmise en priorité à la deuxième instance de fonction réseau virtuelle (132), la première partie des données d'état de fonctionnement par rapport à la deuxième partie des données d'état de fonctionnement étant déterminée en fonction d'un ou d'une pluralité des critères suivants :
- en fonction d'un type de données des données d'état de fonctionnement,
- en fonction d'un type de session d'utilisateur du terminal d'utilisateur (20) ou de la pluralité de terminaux d'utilisateur (20),
- en fonction de la fréquence d'une interaction d'utilisateur du terminal d'utilisateur (20) ou de la pluralité de terminaux d'utilisateur (20),
- en fonction d'un profil de qualité de service du terminal d'utilisateur (20) ou de la pluralité de terminaux d'utilisateur (20).

7. Procédé selon l'une des revendications précédentes, **caractérisé en ce que** la détection, pendant la deuxième étape et par le premier nœud de réseau de base de données (141) ou par un autre nœud de réseau du réseau de télécommunications (100), d'un état de défaut et/ou d'un état de surcharge de la première instance de fonction réseau virtuelle (131) est effectuée en raison d'un ou plusieurs des événements suivants :
- l'interruption de la liaison entre le premier nœud de réseau de base de données (141) et la première instance de fonction réseau virtuelle (131), en particulier en raison d'une génération d'un signal SIGPIPE et/ou en particulier en raison de l'expiration d'un compteur de délai d'attente pour la réception de données attendues consécutives à une demande,
- l'absence d'un signal transmis régulièrement par la première instance de fonction réseau virtuelle (131), en particulier un signal de battement de cœur (ou heartbeat),
- un changement significatif d'un motif de trafic de données entre la première instance de fonction réseau virtuelle (131) et le premier nœud de réseau de base de données (141), en particulier une chute brutale d'un débit de trafic de données entre la première instance de fonction réseau virtuelle (131) et le premier nœud de réseau de base de données (141) en dessous de la valeur habituelle pour l'heure du jour et/ou en dessous d'une valeur ou d'une valeur limite selon une statistique de base de données du premier nœud de réseau de base de données (141),
- une information sur un état de défaut et/ou un état de surcharge de la première instance de fonction réseau virtuelle (131) sur la base d'un outil de surveillance et/ou d'un système OAM, c'est-à-dire opérations, administration et maintenance.

8. Réseau de télécommunications (100), comprenant une pluralité de terminaux d'utilisateur (20) et utilisant la virtualisation des fonctions réseau pour améliorer le fonctionnement du réseau de télécommunications (100),
le réseau de télécommunications (100) mettant à la disposition de la pluralité de terminaux d'utilisateur (20) une pluralité de services de télécommunication au moyen d'une pluralité d'instances de fonction réseau virtuelle (130),
le réseau de télécommunications (100) présentant une fonctionnalité de base de données (140) comprenant un premier nœud de réseau de base de données (141) et au moins un deuxième nœud de réseau de base de données (142), le réseau de télécommunications (100) comprenant une première instance de fonction réseau virtuelle (131), le réseau de télécommunications (100) étant configuré de telle sorte que :
- la première instance de fonction réseau virtuelle (131) est utilisée pour mettre un service de télécommunication défini parmi la pluralité de services de télécommunication à la disposition d'un ou d'une pluralité de terminaux d'utilisateur (20), la première instance de fonction réseau virtuelle (131) comprenant des données d'état de fonctionnement correspondant à l'état de fonctionnement, les données d'état de fonctionnement correspondant à l'état de fonctionnement de la première instance de fonction réseau virtuelle (131) et ces données d'état de fonctionnement étant transmises au premier nœud de réseau de base de données (141),
- en cas de la détection d'un état de défaut et/ou d'un état de surcharge de la première instance de fonction réseau virtuelle (131) par le premier nœud de réseau de base de données (141) ou par un autre nœud de réseau du réseau de télécommunications (100), une deuxième instance de fonction réseau virtuelle (132) est mise à disposition, le réseau de télécommunications (100) comprenant la deuxième instance de fonction réseau virtuelle (132),
- les données d'état de fonctionnement sont transmises à la deuxième instance de fonction réseau virtuelle (132) ou demandées par la deuxième instance de fonction réseau virtuelle (132) et la deuxième instance de fonction réseau virtuelle (132) est utilisée pour mettre le service de télécommunication défini à la disposition du terminal d'utilisateur (20) ou de la pluralité de terminaux d'utilisateur (20),
**caractérisé en ce que** le réseau de télécommunications (100) est en outre configuré de telle sorte qu'en cas de détection d'un état de défaut et/ou d'un état de surcharge de la première instance de fonction réseau virtuelle (131) par le premier nœud de réseau de base de données (141) ou par un autre nœud de réseau du réseau de télécommunications (100), au moins une partie des données d'état de fonctionnement sont répliquées du premier nœud de réseau de base de données (141) au deuxième nœud de réseau de base de données (142), les données d'état de fonctionnement étant répliquées exclusivement en cas de détection de l'état de défaut et/ou de l'état de surcharge de la première instance de fonction réseau virtuelle (131).

9. Réseau de télécommunications (100) selon la revendication 8, **caractérisé en ce que** le premier nœud de réseau de base de données (141) et le deuxième nœud de réseau de base de données (142) sont localisés à distance l'un de l'autre dans l'espace, en particulier sous la forme de bases de données géo-redondantes.

10. Programme d'ordinateur comprenant des moyens de code de programme à l'aide desquels les étapes d'un procédé selon l'une des revendications 1 à 7 peuvent être mises en œuvre lorsque le programme d'ordinateur est exécuté sur un dispositif programmable faisant partie du réseau de télécommunications (100).

11. Produit programme d'ordinateur comprenant un support lisible par ordinateur et un programme d'ordinateur stocké sur le support lisible par ordinateur, comprenant des moyens de code de programme pour améliorer le fonctionnement d'un réseau de télécommunications (100) en utilisant la virtualisation des fonctions réseau au sein du réseau de télécommunications (100), qui permettent de mettre en œuvre les étapes d'un procédé selon l'une des revendications 1 à 7 lorsque le programme d'ordinateur est exécuté sur un dispositif programmable faisant partie du réseau de télécommunications (100).
